Europäisches Patentamt

European Patent Office

Office européen des brevets

(19)

(11) Veröffentlichungsnummer : **0 003 772**
**B2**

(12)                    **NEUE EUROPÄISCHE PATENTSCHRIFT**

(45) Veröffentlichungstag der neuen Patentschrift :
07.05.86

(21) Anmeldenummer : 79100355.1

(22) Anmeldetag : 08.02.79

(51) Int. Cl.⁴ : **C 09 K 21/14, C 09 D 5/18,
C 08 L 61/06**

(54) Feuerschutzmasse.

(30) Priorität : 23.02.78 DE 2807697

(43) Veröffentlichungstag der Anmeldung :
05.09.79 Patentblatt 79/18

(45) Bekanntmachung des Hinweises auf die Patenterteilung : 16.09.81 Patentblatt 81/37

(45) Bekanntmachung des Hinweises auf die Entscheidung
über den Einspruch : 07.05.86 Patentblatt 86/19

(84) Benannte Vertragsstaaten :
BE CH DE FR GB NL SE

(56) Entgegenhaltungen :
DE-A- 1 419 963
DE-A- 1 453 377
DE-A- 1 569 927
DE-A- 1 814 137
DE-A- 2 314 996
DE-B- 1 061 011
DE-B- 1 245 519
FR-A- 1 529 506
FR-A- 2 372 218
GB-A-   755 551
US-A- 2 912 392
US-A- 3 124 542
US-A- 3 955 987
Ullmann's Encyklopädie der technischen Chemie, 3.
Auflage, Band 13 (1962), Seite 477
Chem. Abstracts Vol. 82 (1975), Seite 96, Nr. 141751a

(73) Patentinhaber : BASF Aktiengesellschaft
Carl-Bosch-Strasse 38
D-6700 Ludwigshafen (DE)

(72) Erfinder : Marx, Hans-Norbert
Mozartweg 8
D-7580 Buehl-Weitenung (DE)
Erfinder : Goettsche, Reimer, Dr.
Hafnerweg 17
D-7570 Baden-Baden 19 (DE)

**Beschreibung**

Feuerschutzmittel, die zum Anstreichen oder Imprägnieren von brennbaren Materialien, wie Holz, Cellulosefaserplatten, Papier, Karton oder dergleichen, oder von nicht brennbaren Stoffen, wie Metall, Gips oder dergleichen, verwendet werden sollen und die bei Flammentemperatur eine Schutzwirkung ausüben, sind schon seit langem bekannt. Es ist ferner bekannt, für diesen Zweck Gemische zu verwenden, die aus Harzen, Stärke oder Leim und schaumbildenden Stoffen, wie phosphorsauren Salzen, Borsäure oder dergleichen bestehen. Als besonders vorteilhaft haben sich Gemische der letzteren Art erwiesen, die 50 bis 80 % schaumbildender Stoffe, z. B. Ammoniumphosphat, 10 bis 50 % eines Harnstoff-Formaldehyd-Harzes, wobei bei der Bildung der Harze der Formaldehyd ganz oder zum Teil durch Formaldehyd liefernde Stoffe, wie Hexamethylentetramin, ersetzt sein kann, und 3 bis 50 % Kohlehydrate oder Leim enthalten. Derartige Gemische können in Pulverform, in Flüssigkeiten, wie Wasser, suspendiert oder ganz oder teilweise gelöst zur Anwendung kommen. In der Flamme bilden derartige Feuerschutzmittel einen fest zusammenhängenden, porigen, kohlenstoffhaltigen Schaum, der ausgezeichnet wärmeisolierend wirkt.

Derartige Anstrich- bzw. Überzugsmittel sind beispielsweise in den folgenden Patentschriften bzw. Unterlagen zu Patentanmeldungen beschrieben : DE-PS 962 824, DE-AS 10 61 011, DE-PS 10 65 116, DE-OS 16 44 780, DE-OS 17 94 343, DE-OS 22 00 104.

Es ist auch bekannt, derartige Anstrich- bzw. Überzugsmittel zu Streifen von größerer Schichtdicke zu verarbeiten, beispielsweise indem man die Mittel in pastöser Form auf Glasseidengewebe oder -vliese aufbringt, trocknet und in Streifen schneidet. In entsprechende Nuten von Türblättern eingeklebt, dichten sie die Falze der Türen im Brandfalle durch Aufschäumen ab. Diese Schutztechnik ist beispielsweise in Wood Treatment 1975/18. S. 3 beschrieben ; in vielen Ländern ist die Ausrüstung von Türen und verschließbaren Verbindungsöffnungen zwischen verschiedenen Räumen mit solchen Brandschutzstreifen vorgeschrieben.

Die Entwicklung geht dahin, die Schutzstreifen durch Pasten zu ersetzen, die unmittelbar in die Falznuten eingestrichen werden können. Die angebotenen pastenförmig verarbeitbaren Mittel leiden darunter, daß die naturgemäß kaum tragende Strukturen (Gewebe o. a.) enthalten und demgemäß vorzugsweise auf — im trockenen Zustand — mechanische Widerstandsfähigkeit (z. B. gegen Ausbröckeln beim Türenzuschlagen) hin aufgebaut sind.

Dabei wird die Fähigkeit zum Aufblähen der Streifen im Brandfalle, die naturgemäß viel ausgeprägter sein muß als bei reinen Anstrichstoffen, vernachlässigt.

Während Anstrichstoffe in der Hitze meist nur auf das 5- bis 10-fache Volumen des unbeanspruchten Mittels aufschäumen, müssen Feuerschutzstreifen von einem kleinen Ausgangsquerschnitt aus (z. B. 0,5 cm²) im Brandfall den ganzen, oftmals noch schlecht passenden Türfalz ausschäumen. Hierfür sind Aufblähgrade (vgl. hierzu die DE-AS 10 61 011) von mehr als 10 unbedingt erforderlich. Der entstehende Kohlenstoffschaum soll mechanisch so stabil sein, daß er zusätzliche Haltekräfte zwischen Türzarge und Türblatt entwickelt.

Es wurde gefunden, daß die Aufgabe, solche Streichmassen zu schaffen, gelöst werden kann, wenn man die als Grundstoffe für solche Pasten oder Überzugsmittel bisher weitgehend üblichen Aminoplaste (d. h. also Harnstoff-, Melamin-, Dicyandiamid- und ähnliche (Form)aldehydkondensate durch ein Phenol-(Form)aldehydharz ersetzt (die Mitverwendung von Aminoplasten kann natürlich — in untergeordneten Mengen — vorgesehen werden) und im übrigen eine Kombination bestimmter anderer Stoffe verwendet. Unmittelbarer Erfindungsgegenstand ist daher eine in der Hitze aufschäumende bzw. eine Dämmschicht bildende Feierschutzmasse, die vorzugsweise zur Sicherung von Türfalzen gegen den Durchtritt von Feuer im Brandfalle geeignet ist und jeweils etwa

    a)   15 bis 40 Gew.-% eines wärmeaktiven Phenolharzes
    b)   25 bis 45 Gew.-% eines Ammoniumsalzes
    c)   10 bis 20 Gew.-% Pentaerythrit
    d)   15 bis 40 Gew.-% Melamin oder Dicyandiamid
    e)    1 bis 10 Gew.-% Polyvinylalkohol

enthält, sowie gegebenenfalls

f) Wasser und/oder ein organisches Lösungsmittel in einer solchen Menge enthält, daß die Bestandteile a) bis e) im wesentlichen fest bleiben und eine streichbare, spachtelbare oder auch fließfähige Masse bilden.

Als Phenolharze im Sinne der Erfindung kommen selbsthärtende Harze in Betracht (« Resole », bei denen das Molverhältnis von Aldehyd zu Phenol über 1 liegt). Der Anteil des Phenolharzes in der festen Masse liegt bei 15 bis 40 Gew.-% (d. h. Gewichtsteilen je 100 Teilen blähfähige Masse).

Als Ammoniumsalze sind die für die Herstellung von blähfähigen Massen üblichen Salze, besonders die Phosphate zu nennen ; Ammoniumpolyphosphate, wie sie in den DE-OSen 15 67 674 und 17 94 343 beschrieben sind, werden bevorzugt. Ihr Anteil am Feststoff der blähfähigen Masse beträgt i. a. 25 bis 45 Gew.%.

Als Bindemittel wird Polyvinylalkohol verwendet, dessen Anteil i. a. gering gehalten werden kann. Er wird bevorzugt in Form einer Lösung in Wasser in die zunächst bis zur Streich- bzw. Spachtelfähigkeit anzuteigende Masse eingebracht, wie dies in den Beispielen gezeigt wird.

Der Anteil an Wasser oder Lösungsmittel hat im übrigen lediglich für die Verarbeitung der Massen Bedeutung und richtet sich nach dem Erfordernis, daß die Masse streichbar, spachtelfähig oder auch fließfähig sein muß. Gewöhnlich kommt man mit weniger als 50 Gew.% aus (hier bezogen auf die Gesamtmasse, d. h. einschließlich Wasser und Lösungsmittel) und meist mit weniger als 30 Gew.%.

Die erfindungsgemäßen Massen können weiterhin in insgesamt untergeordneten Mengen Bestandteile enthalten, die nicht zur Erfindung gehören, wie Farbstoffe, Pigmente, Quellungs-, Netz- oder Dispergiermittel, Fungizide, Bakterizide ; Streckmittel, wie Holzmehl ; Faserstoffe, wie Glasfasern, Asbest oder textile Fasern ; Metallpulver oder halogenierte Kohlenwasserstoffe.

Zur Herstellung der erfindungsgemäßen Massen können die festen Bestandteile zunächst gemahlen, trocken vorgemischt und, falls notwendig, gemeinsam nachvermahlen oder einfach zum Zwecke der innigen Vermischung gemeinsam vermahlen werden. Auch ist ein unmittelbarer Zusatz von Wasser oder Lösungsmittel zum Zwecke der leichteren Verarbeitung möglich. Als Mischbehälter kommen z. B. Kugelmühlen, Kneter oder Walzenwerke in Betracht, wobei schon vorhandene Ausrüstungen in aller Regel verwendet werden können.

Man kann auch vorsehen, daß die Massen erst vom Verarbeiter in spachtel- oder streichfähige Form gebracht werden und zunächst lediglich Pulver herstellen, die in Säcken oder Pulverbehältern gehandelt werden können. Die Erfindung ist nicht an das Vorliegen der streichfähigen Form gebunden, zumal die Massen sich auch zum Aufspachteln auf Gewebe oder Vliese eignen, die nach dem Trocknen, wie eingangs erwähnt, zu aufklebefähigen Streifen zerschnitten werden können. Eine andere Verwendungsmöglichkeit ist die oberflächliche Behandlung von vorzugsweise nichtbrennbaren granulierten Trägerstoffen wie Perlit oder Blähglimmer (Vermiculite), wobei man gekörnte Massen erhält, die zum Verfüllen von Leitungsschächten, Wanddurchbrüchen, Hohlräumen in isolierenden Wänden, Türen etc. geeignet sind.

1. Grundmischungen

Beispiel 1

| 25 | Gewichtsteile | (1) Phenolharz 100 %ig, fest wärmereaktiv |
|----|---------------|-------------------------------------------|
| 33 | Gewichtsteile | (2) Ammoniumpolyphosphat |
| 24 | Gewichtsteile | (3) Dicyandiamid |
| 18 | Gewichtsteile | (4) Pentaerythrit |
| 100 | Gewichtsteile | |

Beispiel 2

Die Zusammensetzung entspricht Beispiel 1.
Anstelle von Ammoniumpolyphosphat (2) wird eine gleiche Menge Monoammonphosphat verwendet.

Beispiel 3

Die Zusammensetzung entspricht Beispiel 1.
Anstelle von Dicyandiamid (3) wird eine gleiche Menge Melamin verwendet.
In diesem Rahmen sind nicht nur wie in den vorstehenden Beispielen jeweils ein Partner, sondern auch mehrere Partner gleichzeitig austauschbar.

2. Zusatzmischungen

Mischung A

| 90 | Gewichtsteile | Wasser |
|----|---------------|--------|
| 10 | Gewichtsteile | Polyvinylalkohol, wasserlöslich, niedrigviskos |
| 100 | Gewichtsteile | |

Mischung B

| 80 | Gewichtsteile | Wasser |
|----|---------------|--------|
| 10 | Gewichtsteile | Lösungsmittel [+] |
| 10 | Gewichtsteile | Polyvinylalkohol, wasserlöslich, niedrigviskos |
| 100 | Gewichtsteile. | |

[+] Äthanol, Methyläthylketon, Äthylglykol, Äthylacetat oder ähnliches Lösungsmittel, das, für sich allein angewendet, das verwendete Phenolharz gut lösen würde.

3

Gegebenenfalls können die Zusatzmischungen anstelle von 3 bis 10 Gewichtsteilen Wasser eine Kunststoffdispersion enthalten ; eine 50 %ige wäßrige Dispersion von Vinylpropionat ist z. B. geeignet.

Mischung C

100 Gewichtsteile eines Lösungsmittelgemisches aus gleichen Teilen Äthanol, Methyläthylketon, Äthylglykol, Äthylacetat.

Jeweils 100 Gewichtsteile der Mischung gemäß Beispiel 1 bis 3 werden mit 30 bis 50 Gewichtsteilen der Zusatzmischung A, B oder C zu einer Paste verarbeitet. Die Pasten werden zur Beurteilung ihrer anwendungstechnischen Eigenschaften in flache Nuten mit einem Querschnitt von 2,5 × 10 mm eingerieben, die in die Breitseite von Weichholzlatten mit einem Querschnitt von 20 × 70 cm längs eingefräst sind. Die Pasten trocknen je nach Wasser- oder Lösungsmittelgehalt relativ schnell zu festen Massen.

Zur Demonstration werden in einem auf 450 °C vorgeheizten Versuchsofen jeweils 200 mm lange Stücke der getrockneten Latten innerhalb von 3 (—5) Minuten aufgeschäumt, wobei die folgenden Ergebnisse erhalten werden :

| Mischung | | | Schaumhöhe | Schaumstruktur |
|---|---|---|---|---|
| 1) Grundmischung nach Beispiel 1 | 70 % | = 8 cm x) | | feinporig/fest |
| Zusatzmischung A | 30 % | | | |
| 2) Grundmischung nach Beispiel 1 | 70 % | = 8 cm x) | | feinporig/fest |
| Zusatzmischung B | 30 % | | | |
| 3) Grundmischung nach Beispiel 2 | 65 % | 7 cm | | feinporig/fest |
| Zusatzmischung A | 35 % | | | |
| 4) Grundmischung nach Beispiel 2 | 70 % | = 8 cm x) | | feinporig/fest |
| Zusatzmischung B | 30 % | | | |
| 5) Grundmischung nach Beispiel 3 | 70 % | 7 cm | | feinporig/fest |
| Zusatzmischung A | 30 % | | | |
| 6) Grundmischung nach Beispiel 1 | 70 % | = 8 cm x) | | feinporig/ sehr fest |
| Zusatzmischung C | | | | |
| 7) Handelsprodukt 1 | | 0,5–1 cm | | grobporig/ wenig fest |
| 8) Handelsprodukt 2 | | 0,5–1 cm | | feinporig/weich |
| 9) Handelsübliche Fertigstreifen, eingeklebt | | 3,0–5 cm | | feinporig/mäßig fest |

x) in diesen Versuchen erreichte die Schaumhöhe jeweils die Decke des Muffelofens, die 8 cm von der ursprünglichen Lattenoberfläche entfernt war.

## Beispiel 4

Man mischt 230 Gewichtsteile Blähglimmer der Korngröße 2 bis 3, 680 Gewichtsteile Grundmischung nach Beispiel 1, 50 Gewichtsteile Polyvinylalkohol und 220 Gewichtsteile Wasser. Dem so erhaltenen nassen Granulat wird durch Trocknen ein Teil des Wassers (180 Gewichtsteile) entzogen. Das erhaltene äußerlich trockene Granulat kann zum Verfüllen eines Kabelschachts verwendet werden. Es ist nicht korrosiv und gibt keine Stoffe ab. Beim Erhitzen quillt es zu einer äußerst voluminösen, porigen Masse auf.

Beispiel 5

230 Gewichtsteile Blähglimmer der Korngröße 3 bis 5 und 950 Gewichtsteile der Feuerschutzpaste, wie sie durch Mischen der Grundmischung des Beispiels 2 mit der Zusatzmischung B erhalten wurde, werden in einer Dragiertrommel zu einem Granulat verarbeitet, das wiederum getrocknet und wie im Beispiel 4 erwähnt, verwendbar ist.

**Patentanspruch**

In der Hitze aufschäumende bzw. eine Dämmschicht bildende Feuerschutzmasse, enthaltend jeweils etwa
a) 15 bis 40 Gew.-% eines wärmeaktiven Phenolharzes
b) 25 bis 45 Gew.-% eines Ammoniumsalzes
c) 10 bis 20 Gew.-% Pentaerythrit
d) 15 bis 40 Gew.-% Melamin oder Dicyandiamid
e) 1 bis 10 Gew.-% Polyvinylalkohol sowie gegebenenfalls
f) Wasser und/oder ein organisches Lösungsmittel in einer solchen Menge, daß die Bestandteile a) bis e) im wesentlichen fest bleiben und eine streich- bzw. spachtelbare Masse bilden.

**Claim**

A fireproofing composition which is heat-foamable and forms an insulating layer and which contains approximately
a) 15 to 40 % by weight of a thermosetting phenolic resin,
b) 25 to 45 % by weight of an ammonium salt,
c) 10 to 20 % by weight of pentaerythritol,
d) 15 to 40 % by weight of melamine or dicyandiamide, and
e) 1 to 10 % by weight of polyvinyl alcohol, with or without
f) water and/or an organic solvent in such an amount that the constituents a) to e) remain substantially solid and form a brushable or trowelable mass.

**Revendication**

Matériau de protection contre le feu, moussant ou formant une couche isolante à la chaleur, caractérisé en ce qu'il contient
a) 15 à 40 % en poids environ d'une résine phénolique réagissant à la chaleur,
b) 25 à 45 % en poids environ d'un sel d'ammonium,
c) 10 à 20 % en poids environ de penta-érythritol,
d) 15 à 40 % en poids environ de mélamine ou de dicyandiamide,
e) 1 à 10 % en poids environ d'alcool polyvinylique et, le cas échéant,
f) de l'eau et/ou un solvant organique dans une proportion telle que les éléments a) à e) restent pratiquement solides et forment une pâte applicable à la brosse ou applicable à la racle.